# EUROPÄISCHE PATENTSCHRIFT

(11) **EP 3 245 919 B1**
(45) Veröffentlichungstag und Bekanntmachung des Hinweises auf die Patenterteilung: **27.11.2019**
(21) Anmeldenummer: 17172746.4
(22) Anmeldetag: 12.10.2015
(51) Int. Cl.: A47J 36/20, A47J 27/04, A47J 43/07

(54) **GARAUFSATZ FÜR EIN AUFHEIZBARES GEFÄSS EINER KÜCHENMASCHINE**
COOKING ATTACHMENT FOR A HEATABLE VESSEL OF A KITCHEN APPLIANCE
ACCESSOIRE DE CUISSON POUR UN RÉCIPIENT POUVANT ÊTRE CHAUFFÉ D'UN ROBOT MÉNAGER

(30) Priorität: 28.10.2014 DE 102014115649
(43) Veröffentlichungstag der Anmeldung: 22.11.2017
(62) Teilanmeldung aus: 15189261.9
(73) Patentinhaber: Vorwerk & Co. Interholding GmbH, 42275 Wuppertal (DE)
(72) Erfinder: Cornelißen, Markus, 53332 Bornheim (DE)
(74) Vertreter: Müller, Enno

(56) Entgegenhaltungen:
- EP-A1- 0 326 105
- WO-A1-95/29615
- WO-A2-2014/013417
- US-A- 5 275 094
- US-A- 5 676 042

## Beschreibung

Die Erfindung betrifft einen Garaufsatz nach den Merkmalen des Oberbegriffes des Anspruches.

Garaufsätze dieser Art sind im Stand der Technik bekannt. Die Druckschrift WO 1995/029615 A1 offenbart beispielsweise eine Küchenmaschine mit einem solchen Garaufsatz. Der aus dem Gefäß aufsteigende Dampf wird dazu genutzt, in dem Garaufsatz enthaltene Zubereitungsgüter zu erhitzen bzw. zu garen. Dazu wird der Garaufsatz auf das Gefäß der Küchenmaschine aufgesetzt, so dass der aus dem Gefäß nach oben aufsteigende Dampf durch die Bodenöffnungen des Garaufsatzes in das Innere des Garaufsatzes gelangen kann. Der Boden des Garaufsatzes weist beispielsweise eine Perforierung auf, welche eine Vielzahl von Bodenöffnungen beinhaltet. Durch die Bodenöffnungen tritt sowohl der aus dem Gefäß aufsteigende Dampf, als auch das in dem Garaufsatz gebildete Kondensat, welches in das Gefäß der Küchenmaschine strömt.

Aus der US 5 275 094 A ist eine Dampfgarvorrichtung bekannt mit einem Garaufsatz. Umgebend zu einem zentralen, erhöhten Bereich sind Öffnungen ausgebildet.

Aus der US 1 922 419 A ist ein Kochtopf bekannt, in welchem ein Gargefäß auf einem Fußteil, das sich im Wasserbad befindet, aufsteht. Der Boden des Gargefäßes ist geschlossen.

Aus der US 5 097 753 A ist eine Wasserdampfgareinrichtung mit einem Gareinsatz bekannt. Der Gareinsatz weist in einem ebenflächig ausgebildeten Boden Bodenöffnungen auf.

Aus der DE 20 2014 003 418 U1 ist ein Gareinsatz mit einem herausnehmbaren Boden bekannt, der randseitig zwei voneinander entfernte Öffnungen aufweist.

Aus der US 5 301 604 A ist eine Brateinrichtung mit einem Eintauchkörper bekannt. Der Boden des Eintauchkörpers weist Löcher auf.

Aus der US 5 301 604 A ist eine Brateinrichtung mit einem Eintauchkörper bekannt. Im ebenflächig ausgebildeten Boden des Eintauchkörpers sind Löcher ausgebildet.

Aus der EP 0326105 A ist ein Gefäß zum Dampfgaren bekannt, bei welchem der Boden Dampföffnungen und hiervon separat ausgebildete Kondensatöffnungen aufweist. Eine Dampföffnung oder Kondensatöffnung ist zu einer bestimmten Seite des Bodens hin durch eine konische Wandausformung, die an ihrer Spitze die Öffnung aufweist, gebildet.

Ausgehend von dem zuletzt vorgenannten Stand der Technik beschäftigt sich die Erfindung mit der Aufgabe, einen Garaufsatz für ein aufheizbares Gefäß einer Küchenmaschine anzugeben, das hinsichtlich einer Kondensatöffnung vorteilhaft ausgestaltet ist.

Diese Aufgabe ist beim Gegenstand des Anspruches 1 gelöst, wobei darauf abgestellt ist, dass die Kondensatöffnung eine Kapillare mit einem ersten Endbereich und einem zweiten Endbereich aufweist, wobei der erste Endbereich im Bereich des Bodens auf der dem Inneren des Garaufsatzes zugewandten Seite angeordnet ist, und wobei der zweite Endbereich auf der dem Gefäß der Küchenmaschine zugewandten Seite des Garaufsatzes aus dem Garaufsatz geführt ist, so dass an dem ersten Endbereich befindliches Kondensat via der Kapillare in das Gefäß fließen kann.

Es wird bei dieser Ausgestaltung der Kapillareffekt genutzt, um in dem Garaufsatz gesammeltes Kondensat ohne Beeinflussung des entgegen gerichteten Dampfstroms in das Gefäß der Küchenmaschine zu leiten, wo es dann wieder für einen erneuten Dampfzyklus zur Verfügung steht.

Dazu weist der Garaufsatz eine Kapillare auf, welche ab einer bestimmten Füllhöhe mit dem in dem Garaufsatz gesammelten Kondensat in Kontakt steht. Sobald in dem Garaufsatz eine solche Menge Kondensat gebildet ist, dass der erste Teilbereich der Kapillare in das Kondensatvolumen eintaucht, wird das Kondensat aufgrund des Kapillareffektes via der Kapillare von dem Garaufsatz in das Gefäß geleitet. Die Höhe des mindestens benötigten Füllstandes kann besonders einfach durch den Abstand des ersten Endbereiches von dem Boden des Garaufsatzes variiert werden. Der Kapillareffekt setzt hierbei erst dann ein, wenn der Mindest-Füllstand innerhalb des Garaufsatzes erreicht ist.

Die Kapillare kann auf unterschiedliche Art und Weise ausgebildet sein. Beispielsweise kann diese ein Schlauch, Rohr oder dergleichen mit einem Durchmesser von vorzugsweise nur wenigen µm sein. Je kleiner der Durchmesser ist, desto größer sind der Kapillardruck und der zurückgelegte Weg der Flüssigkeit innerhalb der Kapillare.

Gemäß einer Variante kann eine Wandung der Kapillare durch ein Kragenelement des Bodens des Garaufsatzes gebildet sein, welches eine Dampföffnung umgibt. Dieses Kragenelement steht von dem Boden ab und bildet einen Sammelbereich für in dem Garaufsatz gebildetes Kondensat. Es wird vorgeschlagen, dieses Kragenelement mit einem senkrecht zur Umfangsrichtung U-förmig gekrümmten Ring zu überdecken, welcher mit einem ersten Endbereich der U-Form in den Kondensat-Sammelbereich eingreift und mit einem zweiten Endbereich der U-Form in die Dampföffnung. Dabei bildet sich zwischen dem Kragenelement und dem U-förmigen Ring eine U-förmige Kapillare aus, deren Durchmesser in radialer Richtung beispielsweise durch Abstandshalter eingestellt werden kann.

In Umfangsrichtung können einzelne Teil-Kapillare ausgebildet sein, beispielsweise durch an dem Ring und/oder an dem Kragenelement angeordnete Rippen. Der Kapillareffekt funktioniert dabei wie im Stand der Technik bekannt so, dass das an dem ersten Endbereich der Kapillare stehende Kondensat aufgrund der Oberflächenspannung in die Kapillare aufsteigen kann. Durch eine Störung der Oberflächenspannung im Bereich des zweiten Endbereichs kann die Flüssigkeit wieder aus der Kapillare austreten. Diese Störung kann bspw. durch einen in die Kapillare hineinragenden Docht oder ähnliches bewirkt werden.

Weiter kann der Boden des Garaufsatzes auf der in Richtung des Inneren des Garaufsatzes gewandten Seite eine Mehrzahl von von dem Boden abstehenden Abstandshaltern zur Beabstandung eines in dem Garaufsatz enthaltenen Zubereitungsgutes von der Bodenöffnung aufweisen, wobei eine Bodenöffnung in Umfangsrichtung zumindest teilweise von den Abstandshaltern umgeben ist.

Das in dem Garaufsatz enthaltene Zubereitungsgut wird hierbei mittels der Abstandshalter von dem Boden des Garaufsatzes ferngehalten. Dadurch liegt das Zubereitungsgut nicht mehr unmittelbar an den Bodenöffnungen an und verschließt diese im ungünstigen Fall, sondern es wird ein Freiraum zwischen einer Bodenöffnung und dem Zubereitungsgut geschaffen, in welchen aus dem Gefäß austretender Dampf eintreten kann und durch welchen in dem Garaufsatz gebildetes Kondensat in Richtung des Gefäßes der Küchenmaschine austreten kann. Dadurch, dass die Zubereitungsgüter nun nicht mehr unmittelbar auf den Bodenöffnungen liegen, wird der Strömungswiderstand für die durch die Bodenöffnung strömenden Kondensat- bzw. Dampfströme verringert. Dadurch wird eine schnellere Zubereitung des Zubereitungsgutes ermöglicht, ohne die Heizleistung des Gefäßes der Küchenmaschine erhöhen zu müssen. Darüber hinaus kann auch das in dem Garaufsatz gebildete Kondensat schneller in das Gefäß der Küchenmaschine strömen, so dass dieses für eine erneute Erwärmung zur Verfügung steht und somit insgesamt weniger Wasser für den Dampfkreislauf benötigt wird. Durch die geringer benötigte Menge Flüssigkeit wird gleichzeitig auch die Aufheizphase bis zur Dampfbildung innerhalb des Gefäßes reduziert. Um die Bodenöffnung für Dampf- bzw. Kondensatströme aus unterschiedlichen Strömungsrichtungen offenzuhalten, wird die Bodenöffnung in Umfangsrichtung von mehreren Abstandshaltern umgeben. Die Abstandshalter sollten die Bodenöffnung zumindest in einem Winkelbereich von 90° umgeben. Bevorzugt ist jedoch eine Ausführungsform, bei welcher die Bodenöffnung vollständig, d. h. in einem Winkelbereich von 360°, von Abstandshaltern umgeben ist, beispielsweise von äquidistant entlang des Umfangs angeordneten Abstandshaltern.

Es wird vorgeschlagen, dass der Boden des Garaufsatzes eine Anordnung einer Mehrzahl von Bodenöffnungen und eine Anordnung einer Mehrzahl von Abstandshaltern aufweist, wobei die Anordnung der Abstandshalter die Anordnung der Bodenöffnungen so überlagert, dass eine Bodenöffnung in Umfangsrichtung von mehreren Abstandshaltern umgeben ist, und dass ein Abstandshalter von mehreren Bodenöffnungen umgeben ist. Gemäß dieser Ausführungsform weist der Boden des Garaufsatzes eine Kombination von Bodenöffnungen und Abstandshaltern auf, so dass jeder Bodenöffnung eine Mehrzahl von Abstandshaltern und jedem Abstandshalter eine Mehrzahl von Bodenöffnungen zugeordnet ist. Es ergibt sich somit eine Ausbildung des Bodens, welche im Bereich einer beliebig großen Fläche den vereinfachten Austausch von Dampf bzw. Kondensat zwischen dem Garaufsatz und dem Gefäß der Küchenmaschine erlaubt. Dabei kann beispielsweise eine Bodenöffnung, welche in der Mitte dieser Fläche angeordnet ist, entlang ihres gesamten Umfangs von sowohl Abstandshaltern als auch weiteren Bodenöffnungen umgeben sein, während eine Bodenöffnung, welche Teil des Randbereiches dieser Fläche ist, nur unvollständig von Abstandshaltern bzw. auch Bodenöffnungen umgeben ist. Die sich überlappenden Anordnungen von Bodenöffnungen und Abstandshaltern können dabei regelmäßig oder unregelmäßig ausgebildet sein, so dass jeder Bodenöffnung im Wesentlichen eine gleiche Anzahl oder eine abweichende Anzahl von Abstandshaltern zugeordnet ist.

Es wird insbesondere vorgeschlagen, dass die Anordnung der Bodenöffnungen und die Anordnung der Abstandshalter eine regelmäßige, zumindest zweidimensionale Struktur bilden, in welcher zwischen in Bezug auf eine erste Richtung aufeinanderfolgenden Abstandshaltern ein sich in eine von der ersten Richtung abweichende zweite Richtung erstreckender, aufeinander folgende Bodenöffnungen aufweisender Strömungskanal für Dampf und/oder Kondensat ausgebildet ist. Durch die erfindungsgemäße regelmäßige Struktur der in dem Boden ausgebildeten Bodenöffnungen und an dem Boden angeordneten Abstandshalter können gezielt Strömungskanäle für eine widerstandsarme Strömung von Dampf und/oder Kondensat ausgebildet sein. Die Abstandshalter bilden dabei zumindest örtlich begrenzte Wandungsabschnitte eines Strömungskanals, so dass der Dampf bzw. das Kondensat zu einem großen Teil innerhalb des Strömungskanals verbleibt, welcher eine Strömungsverbindung zu den Bodenöffnungen aufweist. Da jedem Strömungskanal eine Vielzahl von Bodenöffnungen zugeordnet ist, wird eine besonders schnelle Abführung des Kondensates aus dem Garaufsatz in das Gefäß der Küchenmaschine ermöglicht. Das Kondensat steht somit nicht an einer einzigen Bodenöffnung an, sondern kann auf eine Vielzahl von hintereinander angeordnete Bodenöffnungen verteilt werden, so dass beispielsweise eine Verstopfung einer einzelnen Bodenöffnung nicht zu einer maßgeblichen Reduzierung der Kondensatströmung führt. Ebenso kann auch aus dem Gefäß in den Garaufsatz aufsteigender Dampf durch eine Vielzahl von Bodenöffnungen in den Garaufsatz gelangen, wobei die durch unterschiedliche Bodenöffnungen strömenden Dampfanteile in den jeweils zugeordneten Strömungskanälen gesammelt werden und von dort aus zu einem Teilbereich des Bodens des Garaufsatzes strömen, welcher eine geringste Temperatur aufweist. Dort kann der Dampf beispielsweise an einer Wandung des Garaufsatzes oder auch an den in dem Garaufsatz enthaltenen Zubereitungsgütern kondensieren und entsprechend die Wärmeenergie für den Garprozess übertragen. Anschließend gelangt das entstehende Kondensat über die Strömungskanäle zurück zu den Bodenöffnungen und damit auch in das Gefäß der Küchenmaschine, wo es für einen erneuten Dampfzyklus zur Verfügung steht.

Es wird vorgeschlagen, dass die Abstandshalter Zinnen, Nocken, Zylinder, Rippen, Spitzen, Pyramiden, Filamente und/oder Riffel aufweisen. Grundsätzlich eignen sich jedoch auch andere Formen zur Ausbildung von Abstandshaltern. Wichtig ist, dass die Abstandshalter die Beabstandung der Zubereitungsgüter von dem Boden des Garaufsatzes ermöglichen, so dass die Bodenöffnungen freigehalten werden. Die konkrete Anordnung der Abstandshalter und deren Form sollten somit ermöglichen, dass Kondensat unter jeglicher Art von Zubereitungsgütern hindurch in Richtung der Bodenöffnungen fließen kann. Ebenso sollen die Bodenöffnungen auch zur Durchströmung von Dampf aus dem Gefäß in den Garaufsatz freigehalten werden. Sofern es sich bei den Abstandshaltern beispielsweise um Rippen, Filamente oder Riffel mit einer nicht zu vernachlässigenden Längserstreckung handelt, sollten diese in Richtung ihrer Längserstreckung Unterbrechungen aufweisen, damit der Dampf und/oder das Kondensat auch quer zu der Längserstreckung der Abstandshalter strömen kann und somit aus dem jeweiligen Strömungskanal herausströmen kann.

Weiter kann sich die Dampföffnung in eine Dampfströmungsrichtung von dem Gefäß in das Innere des Garaufsatzes verjüngen, während sich die Kondensatöffnung in eine Kondensatströmungsrichtung von dem Inneren des Garaufsatzes in das Gefäß verjüngt.

Hierbei werden die Bodenöffnungen in Dampföffnungen zum Durchtritt von Dampf aus dem Gefäß in den Garaufsatz und Kondensatöffnungen zum Durchtritt von Kondensat aus dem Garaufsatz in das Gefäß der Küchenmaschine geteilt. Durch diese separate Ausbildung lassen sich die in Bezug auf ihre Strömungsrichtungen abweichenden Strömungen optimieren, insbesondere ist eine schnellere Strömung des Kondensats in Richtung der Bodenöffnung und ein widerstandsarmer Durchtritt des Dampfes bzw. Kondensats durch die Bodenöffnungen möglich. Vorteilhaft wird der aus dem Gefäß nach oben strömende Dampf nicht durch das aus dem Garaufsatz ausströmende Kondensat behindert. Die Unterscheidung der Bodenöffnungen in Dampföffnungen und Kondensatöffnungen erfolgt durch ihre Formgestaltung. Durch die Verjüngung der Bodenöffnungen in eine der Strömungsrichtungen (Dampf/Kondensat) ergibt sich ein vergrößerter Öffnungsquerschnitt auf einer Seite der Bodenöffnung, während sich auf der gegenüberliegenden Seite des Bodens ein verringerter Öffnungsquerschnitt ergibt. Dadurch gelangt das auf einer Seite des Bodens entlang strömende Medium, das heißt entweder der Dampf oder das Kondensat, bevorzugt durch diejenigen Bodenöffnungen, welche den größeren Öffnungsquerschnitt zur Verfügung stellen. Erfindungsgemäß sind die Bodenöffnungen nun so ausgebildet, dass einige der Bodenöffnungen in Richtung des Gefäßes und andere Bodenöffnungen in Richtung des Garaufsatzes verjüngt sind. Insofern durchströmt bevorzugt das Kondensat bzw. der Dampf die Bodenöffnungen. Die gleichzeitige Durchströmung derselben Bodenöffnung durch sowohl Dampf als auch Kondensat wird erheblich reduziert, so dass der Strömungswiderstand deutlich reduziert ist und somit eine schnellere Strömungsgeschwindigkeit erreicht werden kann, was wiederum zu einer schnelleren Zubereitung der in dem Garaufsatz enthaltenen Zubereitungsgüter führt. Durch die Verjüngung der Bodenöffnung entsteht eine trichterförmige Öffnung, welche jedoch in Bezug auf einen Querschnitt nicht rund sein muss, sondern auch oval, quadratisch, polygonal oder auf ähnliche Art und Weise ausgebildet sein kann. Die Steigung der Verjüngung kann dabei ebenfalls variabel sein. Beispielsweise kann die Steigung einen Winkel von 45° zur Flächennormalen der Öffnungsebene aufweisen. Alternativ zu einem stetigen Verlauf der Verjüngung ist es auch möglich, dass die Verjüngung stufenartig erfolgt, so dass Teilbereiche der Bodenöffnung einen Winkel von 90° zu der Flächennormalen der Öffnungsebene aufweisen.

Des Weiteren wird vorgeschlagen, dass einer oder mehreren Bodenöffnungen auf der in Richtung des Garaufsatzes gewandten Seite und/oder auf der in Richtung des Gefäßes gewandten Seite ein von dem Boden abstehendes Kragenelement zugeordnet ist. Das Kragenelement kann dabei die Verjüngung des Öffnungsquerschnitts der Bodenöffnung in Richtung des Gefäßes bzw. des Garaufsatzes fortsetzen. Alternativ ist es auch möglich, dass nur das Kragenelement eine Verjüngung aufweist, nicht jedoch die Bodenöffnung. Das Kragenelement kann beispielsweise ein in einem bestimmten Winkel zu der Senkrechten der Öffnungsebene stehendes Kragenelement sein. Das Kragenelement kann dabei einstückig mit dem Boden des Garaufsatzes oder auch als separates Kragenelement ausgebildet sein. Durch die sich verjüngende Ausbildung, nach welcher das Kragenelement im Wesentlichen die Form eines Trichters aufweist, kann auf der den größeren Öffnungsquerschnitt aufweisenden Seite des Bodens eine größere Menge des Strömungsmediums in Richtung der Bodenöffnung geleitet werden als auf der gegenüberliegenden Seite der Bodenöffnung, auf welcher das Kragenelement lediglich einen kleinen Öffnungsquerschnitt bereitstellt. Grundsätzlich kann das Kragenelement unterschiedliche Formgestaltungen aufweisen. Beispielsweise kann sich das Kragenelement stetig aufweiten oder alternativ dazu stufenartig. Insbesondere empfiehlt es sich, dass ein Abstand zwischen zwei Bodenöffnungen und eine Formgestaltung der zugehörigen Kragenelemente so korrespondiert, dass die Kragenelemente der Bodenöffnungen gleichzeitig ein Kragenelement einer dazwischen angeordneten Bodenöffnung bilden. Dieses Kragenelement weist dann im Gegensatz zu den beiden anderen Kragenelementen in Bezug auf dieselbe Seite des Bodens, auf welcher die Kragenelemente der beiden anderen Bodenöffnungen aufgeweitet sind, eine Verjüngung auf. Dadurch entsteht eine Struktur, in welcher die Kragenelemente benachbarter Bodenöffnungen in entgegengesetzte Richtungen verjüngt sind. Insbesondere empfiehlt sich diese Struktur beispielsweise bei Kragenelementen, welche einen rechteckigen Querschnitt aufweisen. Der Boden des Garaufsatzes weist somit eine Vielzahl von Bodenöffnungen auf, deren Kragenelemente abwechselnd in Bezug auf unterschiedliche Durchströmungsrichtungen verjüngt bzw. aufgeweitet sind, so dass einerseits Dampföffnungen für den widerstandsarmen Durchtritt von Dampf, und andererseits Kondensatöffnungen für einen widerstandsarmen Durchtritt von Kondensat gebildet sind. Durch diese Ausgestaltung werden die Kondensatströmung und die Dampfströmung voneinander getrennt, so dass beispielsweise das in das Gefäß fließende Kondensat nicht den nach oben strömenden Dampf behindert. Das Kondensat fließt über die geneigten Flächen der Kragenelemente, welche gleichzeitig als Abstandshalter für die in dem Gargefäß enthaltenen Zubereitungsgüter dienen, in Richtung der Bodenöffnungen und schließlich entlang der Verjüngung der Kragenelemente in Richtung des Gefäßes. Demgegenüber schirmen diejenigen Kragenelemente, deren verjüngter Öffnungsquerschnitt in Richtung des Inneren des Gargefäßes zeigt, die Bodenöffnung gegenüber einem Durchtritt von Kondensat ab, so dass diese für den nach oben gerichteten Dampfstrom freibleiben. Grundsätzlich können die Kragenelemente unterschiedlich geformte Öffnungsquerschnitte aufweisen, beispielsweise denkbar sind rund, eckige oder polygonal geformte Querschnitte. Die Öffnungsquerschnitte der zur Durchströmung von Dampf vorgesehenen Bodenöffnungen bzw. Kragenelemente sollte dabei vorteilhaft größer sein als ein entsprechender Öffnungsquerschnitt für eine Dampfströmung. In der Praxis hat sich ein Verhältnis der Öffnungsquerschnitte von Dampf zu Wasser von ungefähr 10: 1 als vorteilhaft herausgestellt, das heißt, dass die zur Durchströmung von Dampf bereitgestellte Fläche ungefähr das Zehnfache der für einen Durchtritt von Kondensat bereitgestellten Fläche betragen sollte.

Des Weiteren kann der Boden bezogen auf eine horizontale Ebene der auf einer horizontalen Arbeitsfläche stehenden Küchenmaschine zumindest teilweise in Richtung des Gefäßes geneigt sein, wobei die Bodenöffnung, insbesondere eine Kondensatöffnung zum Austreten von Kondensat aus dem Garaufsatz in das Gefäß, in Bezug auf eine vertikale Richtung in einem untersten Teilbereich des geneigten Bodens angeordnet ist.

Durch die Neigung des Bodens relativ zu einer horizontalen Ebene wird der Abfluss von Kondensat aus dem Garaufsatz via der Bodenöffnung in das Gefäß der Küchenmaschine erleichtert. Dazu ist die Bodenöffnung vorteilhaft in einem untersten Teilbereich des geneigten Bodens, besonders vorteilhaft an einem tiefsten Punkt, angeordnet. Die für den Durchtritt eines Dampfstroms vorgesehenen Bodenöffnungen, das heißt Dampföffnungen, sind entsprechend in einem höher liegenden Teilbereich des geneigten Bodens angeordnet, welcher über dem untersten Teilbereich liegt. Insofern erfolgt auch gemäß dieser Ausführungsvariante eine Trennung des Kondensatstroms von dem Dampfstrom, so dass der Garprozess optimiert werden kann.

Vorteilhaft ist der unterste Teilbereich des geneigten Bodens in einem Zentralbereich des Bodens oder in einem Randbereich des Bodens ausgebildet. Gemäß einer ersten Ausführungsform, bei welcher der unterste Teilbereich zentral an dem Boden angeordnet ist, ist der Boden insgesamt trichterförmig ausgebildet, wobei Kondensat vorteilhaft von allen Seiten radial auf die in dem untersten Teilbereich angeordnete Kondensatöffnung zuströmt. Gemäß einer zweiten Ausführungsform ist die Kondensatöffnung in einem Randbereich des Bodens ausgebildet. Dabei liegt der Randbereich des Bodens - in Bezug auf eine vertikale Richtung der Küchenmaschine - tiefer als ein Zentralbereich. Das in dem Garaufsatz entstehende Kondensat wird somit in den Randbereich des Bodens geführt, wo es schließlich durch die Kondensatöffnung in das Gefäß der Küchenmaschine gelangen kann. Besonders vorteilhaft kann der Randbereich des Bodens als ringförmiger Bereich ausgebildet sein, entlang dessen Umfangsrichtung eine Vielzahl von Kondensatöffnungen nebeneinander angeordnet ist.

Es wird vorgeschlagen, dass zumindest ein in Bezug auf den untersten Teilbereich des geneigten Bodens darüber angeordneter Teilbereich des Bodens zumindest eine Dampföffnung zum Eintreten von aus dem Gefäß austretendem Dampf in den Garaufsatz aufweist, wobei zumindest ein von dem untersten Teilbereich abgewandter Umfangsabschnitt der Dampföffnung ein von dem Boden abstehendes Kragenelement aufweist. Das Kragenelement schützt die Dampföffnung vor einem Durchtritt der in Richtung des Gefäßes strömenden Kondensatströme. Es empfiehlt sich, dass zumindest derjenige Umfangsabschnitt der Dampföffnung ein Kragenelement aufweist, welcher dem untersten Teilbereich des Bodens abgewandt ist, das heißt von der Kondensatöffnung weg zeigt. Dies ist gleichzeitig die Richtung, welche der Strömungsrichtung der Kondensatströmung entgegensteht. Besonders vorteilhaft ist das Kragenelement jedoch ringförmig entlang des gesamten Umfanges der Bodenöffnung angeordnet, so dass die Bodenöffnung von allen Seiten vor einer Durchströmung von Kondensat geschützt ist. Demgegenüber kann jedoch weiterhin der aus dem Gefäß der Küchenmaschine aufsteigende Dampf in den Garaufsatz gelangen, insbesondere ohne Wechselwirkung mit der Kondensatströmung.

Es wird auch vorgeschlagen, dass in dem Garaufsatz und/oder einem den Garaufsatz verschließenden Deckel ein Schwingungsaktor zur Erzeugung einer erzwungenen Schwingung des Garaufsatzes und/oder des Deckels zugeordnet ist, wobei die Schwingung geeignet ist, Kondensat von dem Garaufsatz und/oder dem Deckel zu lösen, so dass dieses in Richtung des Gefäßes fließen kann. Vorteilhaft kann diese Ausführungsvariante der Erfindung auch mit Merkmalen der zuvor erläuterten Ausführungsvarianten kombiniert werden.

Hierbei liegt die Erkenntnis zugrunde, dass an einer Wandung des Garaufsatzes und/oder des Deckels anhaftendes Kondensat durch Schwingungen der Wandung von der Wandung gelöst werden kann und somit unmittelbar nach der Kondensatbildung in Richtung der Bodenöffnung strömt. Die erzwungene Schwingung des Garaufsatzes und/oder des Deckels ist dabei so auszulegen, dass deren Frequenz und Amplitude geeignet ist, die Kondensattropfen von der Wandung zu lösen. Grundsätzlich kann der Schwingungsaktor ein separat an dem Garaufsatz und/oder dem Deckel angeordneter Erreger, wie beispielsweise ein Piezo-Shaker, sein.

Alternativ kann der Schwingungsaktor auch ein Elektromotor der Küchenmaschine sein. Besonders geeignet ist hierzu ein Reluktanzmotor, dessen Spulen derart angesteuert werden, dass eine zum Lösen des Kondensates von der Wandung geeignete Schwingung erzeugt wird.

Des Weiteren werden mit der Erfindung zusätzliche Maßnahmen zur schnellen Abführung des Kondensats aus dem Garaufsatz in Richtung des Gefäßes der Küchenmaschine vorgeschlagen. Die im Folgenden dargestellten Merkmale können dabei in Kombination mit jeder der zuvor erläuterten Ausführungsvarianten kombiniert werden.

Beispielsweise wird vorgeschlagen, dass der Garaufsatz einen Deckel aufweist, dessen in Richtung des Inneren des Garaufsatzes gewandte Seite bezogen auf eine horizontale Ebene des Garaufsatzes zumindest teilweise in Richtung des Bodens des Garaufsatzes geneigt ist.

Darüber hinaus kann der Garaufsatz auch einen Deckel aufweisen, dessen in Richtung des Inneren des Garaufsatzes gewandte Seite zumindest teilweise eine Struktur aufweist, welche Zinnen, Nocken, Zylinder, Rippen, Spitzen Pyramiden, Härchen, Filamente und/oder Riffel aufweist.

Der Deckel des Garaufsatzes ist dabei jeweils so ausgeformt, dass ein Abtropfen des gebildeten Kondensates erleichtert wird. Die Kondensattropfen werden durch die vorgeschlagenen Ausbildungen daran gehindert, an der Wandung des Deckels anzuhaften. Die vorgeschlagene Neigung und/oder Struktur der Innenseite des Deckels kann örtlich begrenzt angeordnet sein oder auch die gesamte Innenwandung des Deckels betreffen. Die Strukturierung dient dazu, die Oberfläche der Deckelwandung zu vergrößern, um möglichst viel Dampf an der Deckelwandung kondensieren und schnell abtropfen zu lassen, so dass das Wasser möglichst schnell in das Gefäß der Küchenmaschine fließt und für einen weiteren Dampfzyklus zur Verfügung steht. Die Struktur kann dabei - ähnlich der Struktur der Innenseite des Garaufsatzes - so gestaltet sein, dass sich Strömungskanäle für das Kondensat bilden. Dabei ist darauf zu achten, dass zwischen den einzelnen Elementen der Struktur, beispielsweise zwischen benachbarten Rippen, ausreichend Platz zur Verfügung steht, um das Kondensat widerstandsarm in Richtung der Bodenöffnungen zu leiten, so dass dieses nicht länger als gewünscht an der Deckelwandung verbleibt. Beispielsweise lässt sich durch die Ausbildung von Härchen oder Filamenten an der Innenseite des Deckels (und/oder der Innenwandung des Garaufsatzes) ein Lotuseffekt bewirken, bei welchem die Benetzbarkeit der Wandung reduziert ist.

Schließlich schlägt die Erfindung neben dem zuvor dargestellten Garaufsatz ebenfalls eine Küchenmaschine mit einem derartigen Garaufsatz vor.

Im Folgenden wird die Erfindung anhand von Ausführungsbeispielen näher erläutert. Es zeigen:
- Fig. 1:: eine Küchenmaschine mit einem Gefäß und einem daran angeordneten Garaufsatz;
- Fig. 2:: einen Garaufsatz gemäß einer ersten Ausführungsvariante in einer Querschnittsansicht;
- Fig. 3:: einen Teilausschnitt des Garaufsatzes gemäß Fig. 2 in einer Draufsicht;
- Fig. 4:: einen Teilausschnitt des Garaufsatzes gemäß Fig. 2 in einer vergrößerten Querschnittsansicht;
- Fig. 5:: einen Teilbereich des Garaufsatzes gemäß einer zweiten Ausführungsvariante;
- Fig. 6:: eine abgewandelte Ausführungsform des Garaufsatzes gemäß Fig. 5;
- Fig. 7:: einen Garaufsatz gemäß einer dritten Ausführungsvariante;
- Fig. 8:: einen Teilbereich des Garaufsatzes gemäß Fig. 7 in einer Draufsicht;
- Fig. 9:: eine abgewandelte Ausführungsform des Garaufsatzes gemäß Fig. 7;
- Fig. 10:: einen Garaufsatz mit einem strukturierten Deckel gemäß einer ersten Ausführungsform;
- Fig. 11:: einen strukturierten Deckel gemäß einer zweiten Ausführungsform;
- Fig. 12:: einen Garaufsatz mit einem Deckel gemäß einer dritten Ausführungsform;
- Fig. 13:: einen Garaufsatz mit einem Deckel gemäß einer vierten Ausführungsform;
- Fig. 14:: einen Garaufsatz gemäß einer vierten Ausführungsvariante;
- Fig. 15:: einen Garaufsatz mit einer strukturierten Innenwandung gemäß einer ersten Ausführungsform;
- Fig. 16:: einen Garaufsatz sowie einen Deckel mit einer strukturierten Innenwandung gemäß einer zweiten Ausführungsform;
- Fig. 17:: einen Garaufsatz gemäß einer fünften Ausführungsvariante.

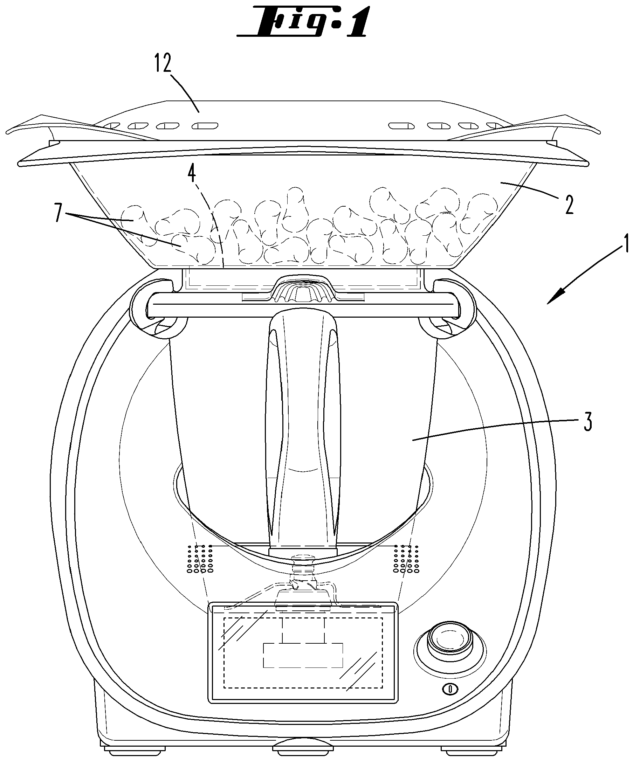

Figur 1 zeigt eine erfindungsgemäße Küchenmaschine 1 mit einem darin eingesetzten Gefäß 3 sowie einem auf dem Gefäß 3 angeordneten Garaufsatz 2. Die Küchenmaschine 1 ist hier beispielsweise als elektromotorisch angetriebenes Rührgerät ausgebildet, welches ein dem Gefäß 3 zugeordnetes Rührwerk, eine Gefäßheizung und ähnliche Einrichtungen aufweist. Das Rührwerk, die Heizeinrichtung und Ähnliches werden mit Hilfe eines Berührungsdisplays oder mit Hilfe von Schaltern angesteuert.

Der Garaufsatz 2 weist einen Boden 4 mit einer oder mehreren Bodenöffnungen 5 auf, durch welche aus dem Gefäß 3 austretender Dampf in den Garaufsatz eintreten kann, um in dem Garaufsatz 2 enthaltene Zubereitungsgüter zu garen. Ebenso kann in dem Garaufsatz 2 gebildetes Kondensat durch die Bodenöffnungen 5 in das Gefäß fließen, um dort für einen erneuten Dampfzyklus zur Verfügung zu stehen. Die in dem Garaufsatz 2 enthaltenen Zubereitungsgüter 7 können beispielsweise Gemüse, Fisch oder Ähnliches sein. Zur Optimierung des Garprozesses ist der Garaufsatz 2 vorteilhaft mittels eines Deckels 12 verschlossen, so dass bevorzugt ein Großteil des in dem Gefäß 3 erzeugten Dampfes in dem Garaufsatz 2 verbleibt und nicht an die Umgebung der Küchenmaschine 1 abgeführt wird.

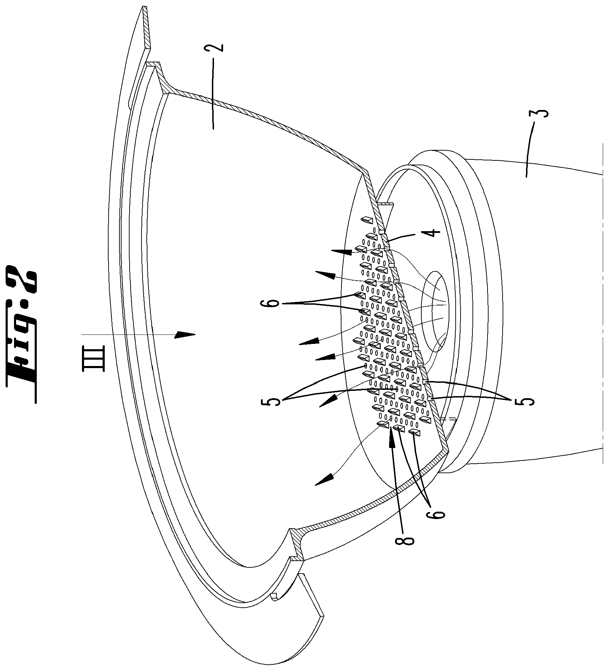

Figur 2 zeigt einen vertikalen Schnitt durch einen an einem Gefäß 3 angeordneten Garaufsatz 2 gemäß einer ersten Ausführungsvariante. Der Boden 4 des Garaufsatzes 2 verfügt über eine Vielzahl von Bodenöffnungen 5, welche durch eine Vielzahl von Abstandshaltern 6 getrennt sind. Die Bodenöffnungen 5 und die Abstandshalter 6 sind dabei in Reihen angeordnet, wobei zwischen aufeinander folgenden Abstandshaltern 6 Strömungskanäle 8 für Dampfströmungen und Kondensatströmungen verbleiben. Die Anordnung der Abstandshalter 6 und die Anordnung der Bodenöffnungen 5 sind dabei so überlagert, dass eine Bodenöffnung 5 jeweils in Umfangsrichtung von mehreren Abstandshaltern 6 umgeben ist, und dass umgekehrt ein Abstandshalter 6 von mehreren Bodenöffnungen 5 umgeben ist. Dies trifft zumindest auf die in einem zentralen Bereich der Struktur angeordneten Bodenöffnungen 5 bzw. Abstandshalter 6 zu. Die in einem Randbereich angeordneten Bodenöffnungen 5 bzw. Abstandshalter 6 sind entsprechend nur über einen bestimmten Umfangsteilabschnitt von Abstandshaltern 6 bzw. Bodenöffnungen 5 umgeben. In dem gezeigten Ausführungsbeispiel gemäß Figur 2 sind die Abstandshalter 6 als Rippen ausgebildet, welche parallel zu benachbarten Rippen angeordnet sind. Zwischen den Rippen befinden sich Bodenöffnungen 5, welche im Bereich der Strömungskanäle 8 angeordnet sind.

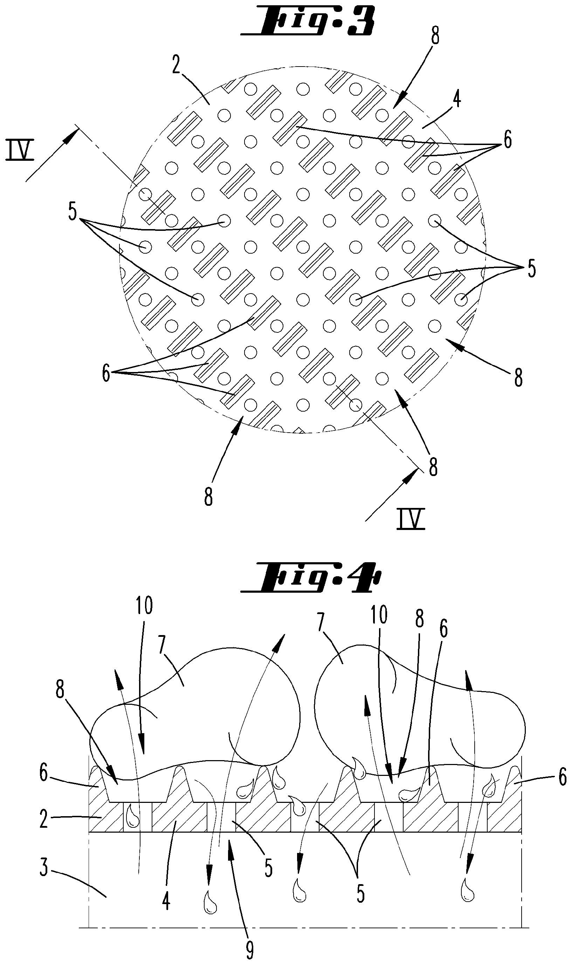

Figur 3 zeigt eine vergrößerte Draufsicht auf einen Teilbereich des Bodens 4 gemäß Figur 2. Hier ist die regelmäßige Struktur erkennbar, welche eine Mehrzahl von Bodenöffnungen 5 und eine Mehrzahl von Abstandshaltern 6 aufweist. Die Bodenöffnungen 5 sind dabei in mehreren parallel zueinander angeordneten Reihen angeordnet. Ebenso sind die Abstandshalter 6 in parallel zueinander angeordneten Reihen ausgerichtet, wobei sich eine Reihe mit Bodenöffnungen 5 jeweils mit einer Reihe von Abstandshaltern 6 abwechselt. Innerhalb dieser Struktur ist ein Abstandshalter 6 regelmäßig von sechs Bodenöffnungen 5 umgeben. Jede Bodenöffnung 5 ist dagegen - je nach ihrer Position innerhalb der Struktur - entweder von zwei Bodenöffnungen 5 und zwei Abstandshaltern 6 oder von vier Abstandshaltern 6 und vier Bodenöffnungen 5 umgeben. Die Zuordnung entsteht durch das Verhältnis zwischen der Anzahl der Bodenöffnungen 5 und der Anzahl der Abstandshalter 6, welches hier ungefähr 2:1 beträgt.

Figur 4 zeigt einen Querschnitt durch benachbart angeordnete Reihen von Bodenöffnungen 5 und Abstandshaltern 6. Die Reihen der Bodenöffnungen 5 bilden gleichzeitig Strömungskanäle 8 für die Durchströmung von Dampf und/oder Kondensat. Die Erfindung funktioniert so, dass die in dem Garaufsatz 2 enthaltenen Zubereitungsgüter 7 mittels der Abstandshalter 6 von den Bodenöffnungen 5 beabstandet werden, so dass die Bodenöffnungen 5 nicht von den Zubereitungsgütern 7 verschlossen sind. Vielmehr bleiben zwischen den Bodenöffnungen 5 und den Zubereitungsgütern 7 die Strömungskanäle 8 offen. Die Bodenöffnungen 5 sind gleichzeitig Dampföffnungen 9 zur Durchströmung der Bodenöffnung 5 mit Dampf und Kondensatöffnungen 10 zur Durchströmung der Bodenöffnungen 5 mit Kondensat. Der aus dem Gefäß 3 der Küchenmaschine 1 aufsteigende Dampf kann durch die Bodenöffnungen 5 in den Garaufsatz 2 strömen und dort innerhalb der Strömungskanäle 8 über den Boden 4 des Garaufsatzes 2 verteilt werden. Dabei strömt der heiße Dampf vorzugsweise an diejenigen Orte innerhalb des Garaufsatzes 2, welche die geringste Temperatur aufweisen. Durch die Ausbildung der Abstandshalter 6 wird eine Strömung zwischen dem Boden 4 und den in dem Garaufsatz 2 enthaltenen Zubereitungsgütern 7 ermöglicht, so dass ein schnelles und homogenes Garergebnis der Zubereitungsgüter 7 geschaffen werden kann. Bei der Abkühlung des Dampfes innerhalb des Garaufsatzes 2 entsteht Kondensat, welches durch die Strömungskanäle 8 in Richtung der Bodenöffnungen 5 abgeleitet werden kann. Durch die Bodenöffnungen 5 gelangt das Kondensat schließlich in das Gefäß 3 der Küchenmaschine 1, wo es für einen erneuten Dampfzyklus zur Verfügung steht.

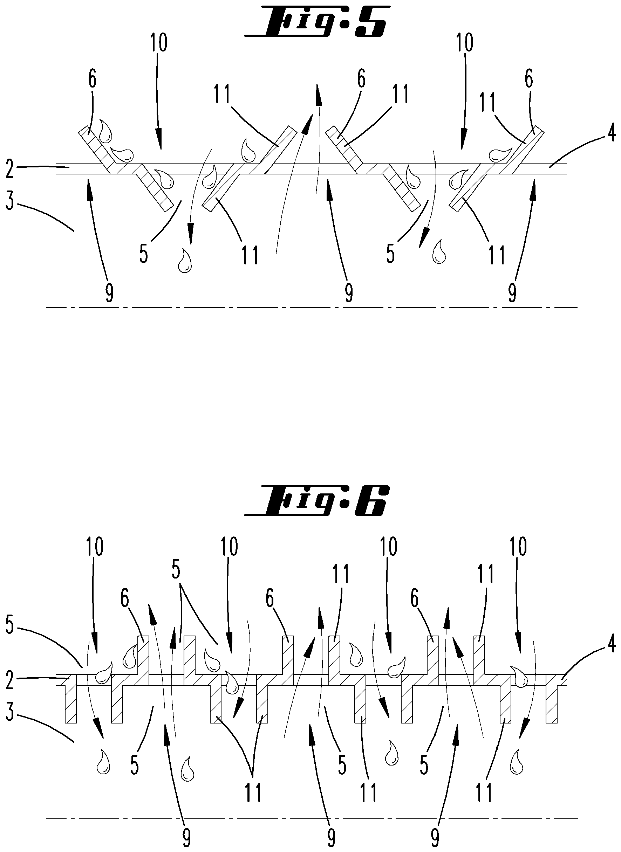

Die Figuren 5 und 6 zeigen unterschiedliche Ausführungsformen vorteilhafter Ausgestaltungen der Bodenöffnungen 5. Insbesondere sind die Bodenöffnungen 5 so ausgestaltet, dass sich getrennte Dampföffnungen 9 zur Durchströmung von Dampf und Kondensatöffnungen 10 zur Durchströmung von Kondensat ergeben. Dies wird dadurch erreicht, dass die Bodenöffnungen 5 von Kragenelementen 11 umgeben sind, deren Öffnungsquerschnitt sich entweder in Richtung des Garaufsatzes 2 oder in Richtung des Gefäßes 3 verjüngt.

Bei der in Bezug auf die Zeichnungsebene der Figur 5 als Zweite von links dargestellten Bodenöffnung 5 handelt es sich beispielsweise um eine Kondensatöffnung 10. Diese weist ein Kragenelement 11 auf, welches sich in eine Richtung von dem Inneren des Garaufsatzes 2 zu dem Gefäß 3 verjüngt. Die von dem Boden 4 abstehenden Kragenelemente 11 bilden gleichzeitig Abstandshalter 6 zur Beabstandung eines in dem Garaufsatz 2 angeordneten Zubereitungsgutes 7 von den Bodenöffnungen 5. Ein Teilbereich des Kragenelementes 11 der Kondensatöffnung 10 bildet zudem einen Teilbereich eines Kragenelementes 11 einer benachbarten (in der Figur links daneben) Dampföffnung 9. Diese Dampföffnung 9 weist einen Öffnungsquerschnitt auf, welcher sich in eine Richtung von dem Gefäß 3 in das Innere des Garaufsatzes 2 verjüngt, das heißt deren Verjüngung in zu der Verjüngung der Kondensatöffnung 10 entgegengesetzte Richtung verläuft. Vorteilhaft weisen die Kragenelemente 11 in einer Draufsicht eine eckige, beispielsweise quadratische, Querschnittsform auf, so dass ein Teilbereich eines Kragenelementes 11 einer ersten Bodenöffnung 5 durch einen Teilbereich eines Kragenelementes 11 einer benachbarten Bodenöffnung 5 gebildet sein kann. Grundsätzlich ist es nicht zwingend erforderlich, dass ein Kragenelement 11 eine Bodenöffnung 5 in Umfangsrichtung vollständig umschließt. Stattdessen kann das Kragenelement 11 aus voneinander beabstandeten einzelnen Teilabschnitten gebildet sein, so dass weiterhin Strömungskanäle 8 auf dem Boden 4 des Garaufsatzes 2 verbleiben. Neben den in Figur 5 dargestellten geneigten Kragenelementen können die Kragenelemente 11 alternativ im Wesentlichen senkrecht zu dem Boden 4 des Garaufsatzes 2 stehen. In diesem Fall kann das Kragenelement 11 stufenförmig verjüngt sein, so dass beispielsweise die in Richtung des Gefäßes 3 gewandte Seite einen größeren Öffnungsquerschnitt bereitstellt als die in Richtung des Inneren des Garaufsatzes 2 gewandte Seite. Dadurch lassen sich nebeneinander ebenfalls wieder Dampföffnungen 9 und Kondensatöffnungen 10 ausbilden, deren Verjüngung in entgegengesetzte Richtungen verläuft.

Grundsätzlich ist es im Sinne der Erfindung auch möglich, sich verjüngende Öffnungsquerschnitte nicht nur durch von dem Boden 4 abstehende Kragenelemente 11 zu verwirklichen, sondern die Verjüngung in der Ebene des Bodens 4 auszubilden, so dass die Endbereiche der Bodenöffnungen 5 auf den gegenüberliegenden Seiten des Bodens 4 unterschiedlich groß sind. In diesem Fall entfällt die Beabstandung der Zubereitungsgüter 7 von den Bodenöffnungen 5 durch Abstandshalter 6. Jedoch können selbstverständlich separate Abstandshalter 6 auf dem Boden 4 angeordnet sein.

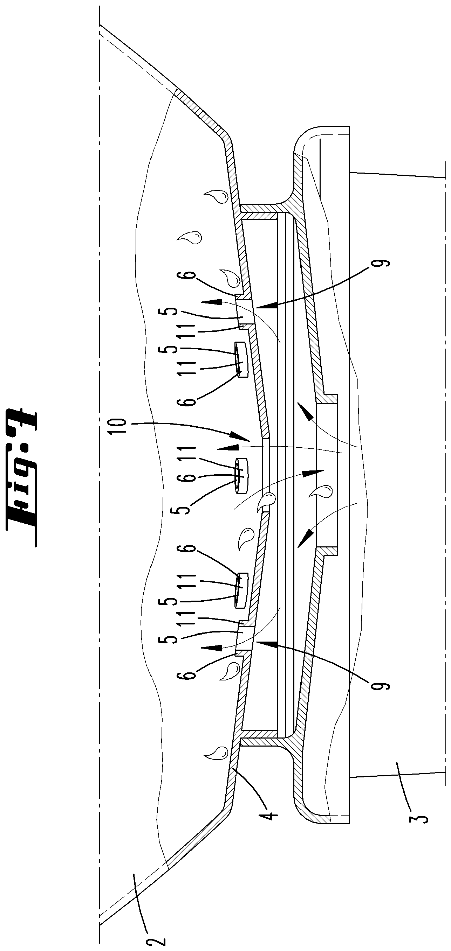

Figur 7 zeigt eine dritte Ausführungsvariante der Erfindung, gemäß welcher der Boden 4 des Garaufsatzes 2 in Richtung des Gefäßes 3 der Küchenmaschine 1 geneigt ist. Der unterste Teilbereich des geneigten Bodens 4 befindet sich dabei zentral in der Mitte des Bodens 4, so dass in dem Garaufsatz 2 gesammeltes Kondensat entlang des gesamten Umfanges der Bodenöffnung 5 auf die Bodenöffnung 5 zuströmen kann. Neben der Bodenöffnung 5, welche zentral als Kondensatöffnung 10 ausgebildet ist, weist der Boden 4 ebenfalls mehrere Bodenöffnungen 5 auf, welche als Dampföffnung 9 ausgebildet sind. Die Dampföffnungen 9 befinden sich in Bezug auf den untersten Teilbereich des geneigten Bodens an einem darüber angeordneten Teilbereich, so dass das Kondensat auf seinem Weg in Richtung der Kondensatöffnung 10 an den Dampföffnungen 9 vorbeiströmt. Die Dampföffnungen 9 weisen Kragenelemente 11 auf, welche zum Einen als Abstandshalter 6 für die in dem Garaufsatz 2 angeordneten Zubereitungsgüter 7 dienen, und zum Anderen zum Schutz der Dampföffnungen 9 vor einer Durchströmung des Kondensates. Auf diese Art und Weise werden die Strömungen von Dampf und Kondensat, welche regelmäßig in entgegengesetzte Richtungen erfolgen, optimal voneinander getrennt.

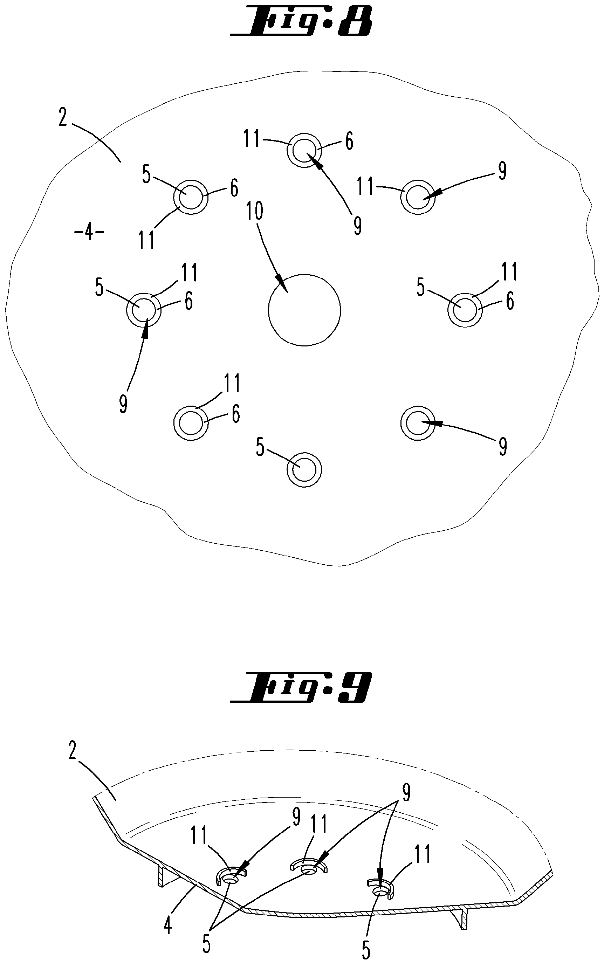

Figur 8 zeigt eine Draufsicht auf einen Teilbereich des Bodens 4 gemäß Figur 7. Zu erkennen ist, dass die Kondensatöffnung 10 in Umfangsrichtung von mehreren, nämlich acht, Dampföffnungen 9 umgeben ist. Jede Dampföffnung 9 weist dabei ein Kragenelement 11 auf, welches die Bodenöffnung 5 in Umfangsrichtung vollständig umgibt.

Figur 9 zeigt demgegenüber eine Ausführungsform, bei welcher die Dampföffnungen 9 nur in einem bestimmten Umfangsabschnitt von Kragenelementen 11 umgeben sind. Diese Kragenelemente 11 befinden sich vorteilhaft an derjenigen Seite der Bodenöffnung 5, welche zuerst von einem den geneigten Boden 4 herabströmenden Kondensat passiert wird. Der nicht von einem Kragenelement 11 geschützte Umfangsabschnitt der Bodenöffnung 5 wird regelmäßig nicht von Kondensat überströmt, da dieser tiefer liegt als die Bodenöffnung 5.

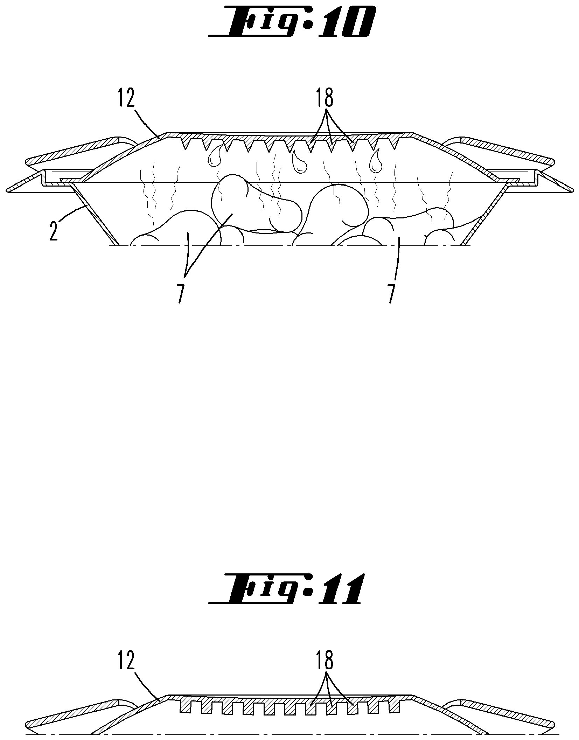

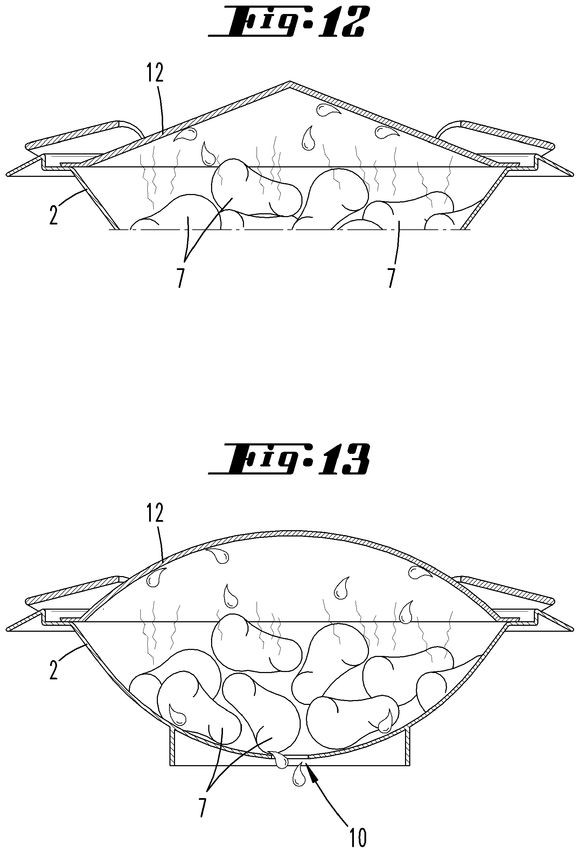

Die Figuren 10 bis 13 zeigen erfindungsgemäße Ausgestaltungen eines Deckels 12 des Garaufsatzes 2, mit deren Hilfe das Anhaften von Kondensat an der inneren Seite des Deckels 12 verhindert werden kann. Die Figuren 10 und 11 zeigen dabei beispielsweise Strukturen, welche als Spitzen (Figur 10) bzw. als Rippen (Figur 11) ausgestaltet sind. Diese Strukturen stellen eine vergrößerte Oberfläche zum Kondensieren von Dampf an dem Deckel 12 zur Verfügung. Die Figuren 12 und 13 zeigen eine geneigte Ausbildung des Deckels 12, so dass an der inneren Seite des Deckels 12 gebildetes Kondensat aufgrund der Schwerkraft in Richtung des Garaufsatzes 2 strömt.

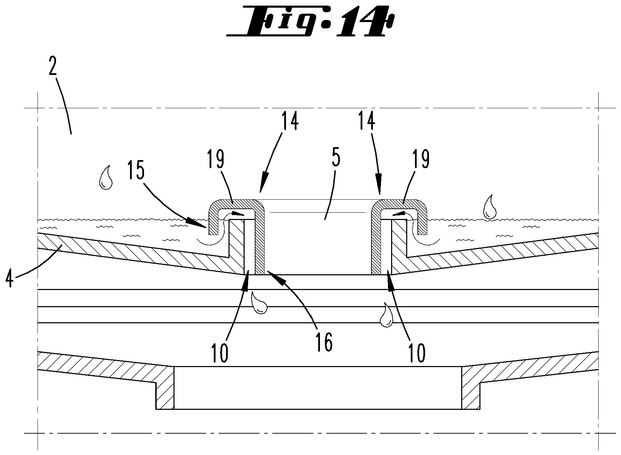

Figur 14 zeigt eine vierte Ausführungsvariante der Erfindung, bei welcher eine Kapillare 14 an dem Garaufsatz 2 ausgebildet ist. Die Kapillare 14 ist zwischen einem eine Dampföffnung 9 begrenzenden Kragenelement 11 und einem sich U-förmig über das Kragenelement 11 erstreckenden Begrenzungselement 19 gebildet. Das Begrenzungselement 19 ist im Wesentlichen ringförmig ausgebildet und in radialer Richtung des Rings U-förmig gefaltet. Somit entsteht zwischen dem Kragenelement 11 und dem Begrenzungselement 19 eine ebenfalls U-förmige Kapillare 14, welche den Innenbereich des Garaufsatzes 2 strömungstechnisch mit dem Gefäß 3 der Küchenmaschine 1 verbindet. Die Kapillare 14 weist in radialer Richtung der Bodenöffnung 5 vorteilhaft einen Durchmesser von wenigen µm auf. In Umfangsrichtung kann die Kapillare 14 durch Wandungen (nicht dargestellt) in einzelne Teil-Kapillare getrennt sein. Die Kapillare 14 weist einen ersten Endbereich 15 auf, der in das auf dem Boden 4 des Garaufsatzes 2 gesammelte Kondensat hineinragt. Ein zweiter Endbereich 16 der Kapillare 14 ist durch die Bodenöffnung 5 nach außen in Richtung des Gefäßes 3 geführt. Sobald das Kondensat auf dem Boden 4 des Garaufsatzes 2 in Kontakt mit dem ersten Endbereich 15 gelangt, kann dieses aufgrund des Kapillareffekts in die Kapillare 14 aufsteigen und in Richtung des Gefäßes 3 gefördert werden.

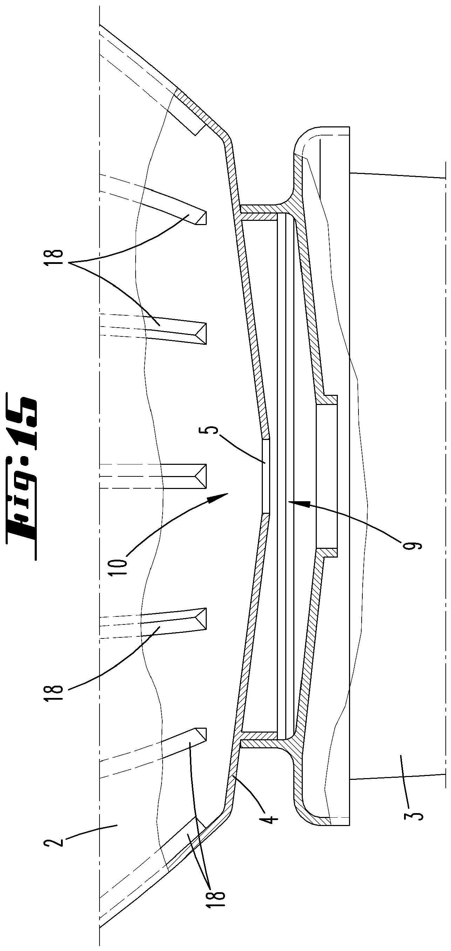

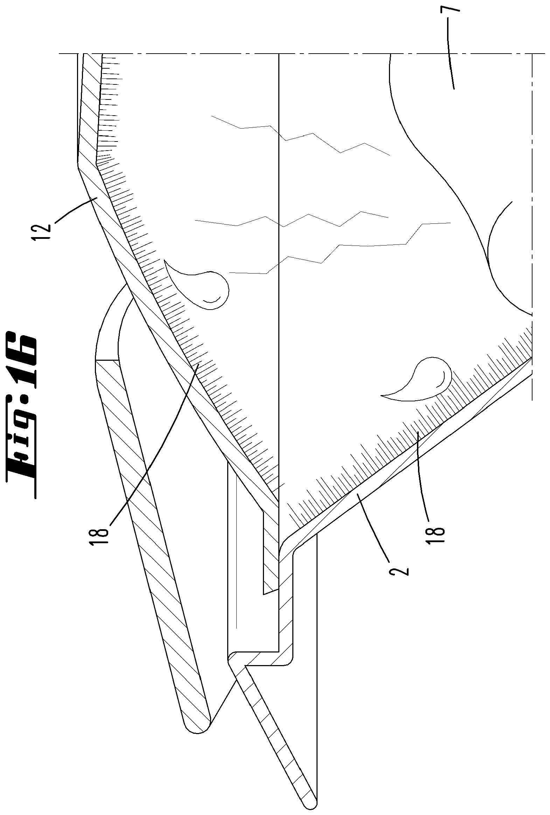

Die Figuren 15 und 16 zeigen Ausführungsvarianten einer an der Innenseite eines Garaufsatzes 2 angeordneten Struktur 18. Die Struktur 8 gemäß Figur 15 besteht aus parallel zueinander angeordneten Rippen, welche im Wesentlichen radial auf eine Bodenöffnung 5 zuweisen. Das in dem Garaufsatz 2 gebildete Kondensat kann zwischen benachbarten Rippen auf die Bodenöffnung 5 zuströmen. In Figur 16 ist demgegenüber eine Ausführungsform gezeigt, bei welcher sowohl die Innenseite des Garaufsatzes 2 als auch die Innenseite des Deckels 12 unterschiedlich lange Härchen aufweisen. Diese Struktur 18 begünstigt eine Lösung des Kondensats von der Innenwandung des Garaufsatzes 2 bzw. des Deckels 12, so dass das Kondensat besonders schnell in das Gefäß 3 geleitet werden kann, wo es schließlich wieder erhitzt und verdampft wird, um die Zubereitungsgüter 7 in einem neuen Zyklus zu erhitzen.

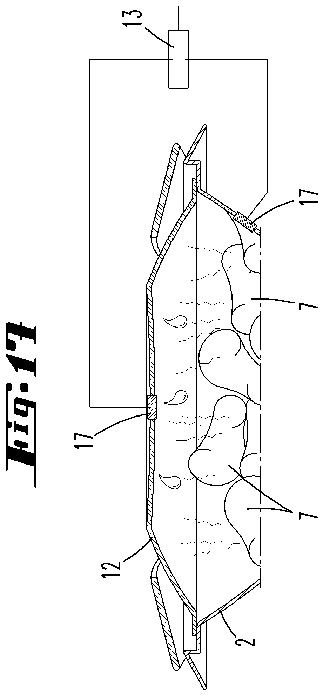

Figur 17 zeigt schließlich eine fünfte Ausführungsvariante der Erfindung, bei welcher sowohl an dem Garaufsatz 2 als auch an dem Deckel 12 Schwingungsaktoren 17 angeordnet sind. Die Schwingungsaktoren 17 sind hier beispielsweise Piezo-Shaker, welche mittels einer Steuerung 13 so mit Spannung beaufschlagt werden, dass diese erzwungene Schwingungen ausführen, welche sich wiederum auf die Wandungen des Garaufsatzes 2 bzw. des Deckels 12 übertragen. Durch die Schwingungen des Garaufsatzes 2 bzw. des Deckels 12 wird an der Wandung anhaftendes Kondensat gelöst, so dass dieses schnell wieder in das Gefäß der Küchenmaschine 1 zurückgeführt werden kann und erneut für die Erwärmung der Zubereitungsgüter 7 zur Verfügung steht.

Obwohl die zuvor beschriebenen Figuren nicht alle erfindungsgemäßen Merkmale in einer Ausführungsform zeigen, ist es selbstverständlich auch möglich, unterschiedliche Merkmale zu kombinieren, welche allesamt dem erfindungsgemäßen Zweck dienen, den Garprozess besonders effektiv zu gestalten.

### Bezugszeichenliste:

- 1: Küchenmaschine
- 2: Garaufsatz
- 3: Gefäß
- 4: Boden
- 5: Bodenöffnung
- 6: Abstandshalter
- 7: Zubereitungsgut
- 8: Strömungskanal
- 9: Dampföffnung
- 10: Kondensatöffnung
- 11: Kragenelement
- 12: Deckel
- 13: Steuerung
- 14: Kapillare
- 15: erster Endbereich
- 16: zweiter Endbereich
- 17: Schwingungsaktor
- 18: Struktur
- 19: Begrenzungselement

## Patentansprüche

1. Garaufsatz (2) für ein aufheizbares Gefäß (3) einer Küchenmaschine (1), welcher Garaufsatz (2) einen Boden (4) mit Bodenöffnungen (5) aufweist, durch welche aus dem Gefäß (3) austretender Dampf in den Garaufsatz (2) eintreten und/oder aus dem Garaufsatz (2) austretendes Kondensat in das Gefäß (3) eintreten kann, wobei die Bodenöffnungen (5) mindestens eine Dampföffnung (9) und mindestens eine von der Dampföffnung (9) separat ausgebildete Kondensatöffnung (10) aufweisen, **dadurch gekennzeichnet, dass** die Kondensatöffnung (10) eine Kapillare (14) mit einem ersten Endbereich (15) und einem zweiten Endbereich (16) aufweist, wobei der erste Endbereich (15) im Bereich des Bodens (4) auf der dem Inneren des Garaufsatzes (2) zugewandten Seite angeordnet ist, und wobei der zweite Endbereich (16) auf der dem Gefäß (3) der Küchenmaschine (1) zugewandten Seite des Garaufsatzes (2) aus dem Garaufsatz (2) geführt ist, so dass an dem ersten Endbereich (15) befindliches Kondensat via der Kapillare (14) in das Gefäß (3) fließen kann.

2. Garaufsatz (2) nach Anspruch 1, **dadurch gekennzeichnet, dass** der Boden (4) auf der in Richtung des Inneren des Garaufsatzes (2) gewandten Seite eine Mehrzahl von von dem Boden (4) abstehenden Abstandshaltern (6) zur Beabstandung eines in dem Garaufsatz (2) enthaltenen Zubereitungsgutes (7) von der Bodenöffnung (5) aufweist, wobei die Bodenöffnung (5) in Umfangsrichtung zumindest teilweise von den Abstandshaltern (6) umgeben ist.

3. Garaufsatz (2) nach Anspruch 2, **dadurch gekennzeichnet, dass** der Boden (4) eine Anordnung einer Mehrzahl von Bodenöffnungen (5) und eine Anordnung einer Mehrzahl von Abstandshaltern (6) aufweist, wobei die Anordnung der Abstandshalter (6) die Anordnung der Bodenöffnungen (5) so überlagert, dass eine Bodenöffnung (5) in Umfangsrichtung von mehreren Abstandshaltern (6) umgeben ist, und dass ein Abstandshalter (6) von mehreren Bodenöffnungen (5) umgeben ist.

4. Garaufsatz (2) nach Anspruch 3, **dadurch gekennzeichnet, dass** die Anordnung der Bodenöffnungen (5) und die Anordnung der Abstandshalter (6) eine regelmäßige, zumindest zweidimensionale Struktur bilden, in welcher zwischen in Bezug auf eine erste Richtung aufeinanderfolgenden Abstandshaltern (6) ein sich in eine von der ersten Richtung abweichende zweite Richtung erstreckender, aufeinanderfolgende Bodenöffnungen (5) aufweisender Strömungskanal (8) für Dampf und/oder Kondensat ausgebildet ist.

5. Garaufsatz (2) nach einem der Ansprüche 2 bis 4, **dadurch gekennzeichnet, dass** die Abstandshalter (6) Zinnen, Nocken, Zylinder, Rippen, Spitzen, Pyramiden, Filamente und/oder Riffel aufweisen.

6. Garaufsatz (2) nach einem der vorhergehenden Ansprüche, **dadurch gekennzeichnet, dass** sich die Dampföffnung (9) in eine Dampfströmungsrichtung von dem Gefäß (3) in das Innere des Garaufsatzes (2) verjüngt, während sich die Kondensatöffnung (10) in eine Kondensatströmungsrichtung von dem Inneren des Garaufsatzes (2) in das Gefäß (3) verjüngt.

7. Garaufsatz (2) nach einem der vorhergehenden Ansprüche, **dadurch gekennzeichnet, dass** einer oder mehreren Bodenöffnungen (5) auf der in Richtung des Garaufsatzes (2) gewandten Seite und/oder auf der in Richtung des Gefäßes (3) gewandten Seite ein von dem Boden (4) abstehendes Kragenelement (11) zugeordnet ist.

8. Gargefäß nach einem der vorhergehenden Ansprüche, **dadurch gekennzeichnet, dass** der Boden (4) bezogen auf eine horizontale Ebene der auf einer horizontalen Arbeitsfläche stehenden Küchenmaschine (1) zumindest teilweise in Richtung des Gefäßes (3) geneigt ist, wobei die Bodenöffnung (5), insbesondere eine Kondensatöffnung (10) zum Austreten von Kondensat aus dem Garaufsatz (2) in das Gefäß (3), in Bezug auf eine vertikale Richtung in einem untersten Teilbereich des geneigten Bodens (4) angeordnet ist, wobei, bevorzugt, der unterste Teilbereich des geneigten Bodens (4) in einem Zentralbereich des Bodens (4) oder in einem Randbereich des Bodens (4) ausgebildet ist.

9. Garaufsatz nach Anspruch 8, **dadurch gekennzeichnet, dass** zumindest ein in Bezug auf den untersten Teilbereich des geneigten Bodens (4) darüber angeordneter Teilbereich des Bodens (4) zumindest eine Dampföffnung (9) zum Eintreten von aus dem Gefäß (3) austretendem Dampf in den Garaufsatz (2) aufweist, wobei zumindest ein von dem untersten Teilbereich abgewandter Umfangsabschnitt der Dampföffnung (9) ein von dem Boden (4) abstehendes Kragenelement (11) aufweist.

10. Garaufsatz nach einem der vorhergehenden Ansprüche, **dadurch gekennzeichnet, dass** dem Garaufsatz (2) ein Schwingungsaktor (17) zur Erzeugung einer erzwungenen Schwingung des Garaufsatzes (2) zugeordnet ist, wobei die Schwingung geeignet ist, Kondensat von dem Garaufsatz (2) zu lösen, so dass dieses in Richtung des Gefäßes (3) fließen kann.

11. Garaufsatz nach Anspruch 10, **dadurch gekennzeichnet, dass** der Schwingungsaktor (17) ein Elektromotor, insbesondere ein Reluktanzmotor, der Küchenmaschine (1) ist.

12. Garaufsatz nach einem der vorhergehenden Ansprüche, **gekennzeichnet durch** einen Deckel (12).

13. Garaufsatz nach Anspruch 12, **dadurch gekennzeichnet, dass** eine in Richtung des Inneren des Garaufsatzes (2) gewandte Seite des Deckels (12) bezogen auf eine horizontale Ebene des Garaufsatzes (2) zumindest teilweise in Richtung des Bodens (4) des Garaufsatzes (2) geneigt ist.

14. Garaufsatz nach einem der Ansprüche 12 oder 13, **dadurch gekennzeichnet, dass** eine in Richtung des Inneren des Garaufsatzes (2) gewandte Seite des Deckels (12) zumindest teilweise eine Struktur aufweist, welche Zinnen, Nocken, Zylinder, Rippen, Spitzen, Pyramiden, Härchen, Filamente und/oder Riffel aufweist.

15. Garaufsatz nach einem der Ansprüche 12 bis 14, **dadurch gekennzeichnet, dass** dem den Garaufsatz (2) verschließenden Deckel ein Schwingungsaktor (17) zur Erzeugung einer erzwungenen Schwingung des Deckels (12) zugeordnet ist, wobei die Schwingung geeignet ist, Kondensat von dem Deckel (12) zu lösen, so dass dieses in Richtung des Gefäßes fließen kann, wobei, bevorzugt, der Schwingungsaktor (17) ein Elektromotor, insbesondere ein Reluktanzmotor, der Küchenmaschine (1) ist.

## Claims

1. A cooking attachment (2) for a heatable vessel (3) of a kitchen appliance (1), which cooking attachment (2) has a bottom (4) comprising bottom openings (5), through which steam, which escapes from the vessel (3), can enter the cooking attachment (2) and/or condensate, which escapes from the cooking attachment (2), can enter the vessel (3), wherein, the bottom openings (5) have at least one steam opening (9) and at least one condensate opening (10), which is embodied separately from the steam opening, **characterized in that** the condensate opening (10) has a capillary tube (14) comprising a first end area (15) and a second end area (16), wherein the first end area (15) is arranged in the area of the bottom (4) on the side facing the interior of the cooking attachment (2), and wherein the second end area (16) is guided out of the cooking attachment (2) on the side of the cooking attachment (2), which faces the vessel (3) of the kitchen appliance (1), so that condensate located on the first end area (15) can flow into the vessel (3) via the capillary tube (14).

2. The cooking attachment (2) according to claim 1, **characterized in that** the bottom (4) has a plurality of spacers (6), which stick out from the bottom (4), for keeping a food (7) contained in the cooking attachment (2) at a distance from the bottom opening (5), on the side, which faces the interior of the cooking attachment (2), wherein the bottom opening (5) is at least partially surrounded by the spacers (6) in circumferential direction.

3. The cooking attachment (2) according to claim 2, **characterized in that** the bottom (4) has an arrangement of a plurality of bottom openings (5) and an arrangement of a plurality of spacers (6), wherein the arrangement of the spacers (6) overlaps the arrangement of the bottom openings (5) in such a manner that a bottom opening (5) is surrounded by a plurality of spacers (6) in circumferential direction, and that a spacer (6) is surrounded by a plurality of bottom openings (5).

4. The cooking attachment (2) according to claim 3, **characterized in that** the arrangement of the bottom openings (5) and the arrangement of the spacers (6) form a regularly, at least two-dimensional structure, in which a flow channel (8) for steam and/or condensate, which extends in a second direction, which differs from the first direction and which has consecutive bottom openings (5), is embodied between spacers (6), which are consecutive with regard to a first direction.

5. The cooking attachment (2) according to one of the claims 2 to 4, **characterized in that** the spacers (6) have battlements, pins, cylinders, fins, tips, pyramids, filaments and/or grooves.

6. The cooking attachment (2) according to one of the preceding claims, **characterized in that** the steam opening (9) tapers in a steam flow direction from the vessel (3) into the interior of the cooking attachment (2), while the condensate opening (10) tapers in a condensate flow direction from the interior of the cooking attachment (2) into the vessel (3).

7. The cooking attachment (2) according to one of the preceding claims, **characterized in that** one or more bottom openings (5) on the in the direction of the cooking attachment (2) facing side and/or on the in the direction of the vessel (3) facing side one of the bottom (4) projecting collar element (11) is associated.

8. The cooking vessel according to one of the preceding claims, **characterized in that** the bottom (4) is at least partially inclined in the direction of the vessel (3), based on a horizontal plane of the kitchen appliance (1), which stands on a horizontal work area, wherein the bottom opening (5), in particular a condensate opening (10) for the escape of condensate from the cooking attachment (2) into the vessel (3), is arranged in a lowermost partial area of the inclined bottom (4), with regard to a vertical direction, wherein, preferably, the lowermost partial area of the inclined bottom (4) is embodied in a central area of the bottom (4) or in an edge area of the bottom (4).

9. The cooking attachment according to claim 8, **characterized in that** at least a partial area of the bottom (4), which, with regard to the lowermost partial area of the inclined bottom (4), is arranged thereabove, has at least one steam opening (9) for steam, which escapes from the vessel (3), to enter the cooking attachment (2), wherein at least a circumferential section of the steam opening (9), which faces away from the lowermost partial area, has a collar element (11), which sticks out from the bottom (4).

10. The cooking attachment according to one of the preceding claims, **characterized in that** the cooking attachment (2) is associated with a vibration actuator (17) for generating a forced vibration of the cooking attachment (2), wherein the vibration is suitable condensate from the cooking attachment (2) solve so that it can flow in the direction of the vessel (3).

11. The cooking attachment according to claim 10, **characterized in that** the vibrating actuator (17) is an electric motor, in particular a reluctance motor, of the kitchen appliance (1).

12. The cooking attachment according to one of the preceding claims, **characterized by** a lid (2).

13. The cooking attachment according to claim 12, **characterized in that** in the direction of the interior of the cooking attachment (2) facing side of the lid (12) relative to a horizontal plane of the cooking attachment (2) at least partially in the direction of the bottom (4) of the cooking attachment (2) is inclined.

14. The cooking attachment according to one of the claims 12 or 13, **characterized in that** in the direction of the interior of the cooking attachment (2) facing side of the lid (12) at least partially has a structure with battlements, cams, cylinders, ribs, tips, pyramids, hairs having filaments and/or corrugations.

15. Cooking attachment according to one of the claims 12 to 14, **characterized in that** the cover closing the cooking attachment (2) is associated with a vibration actuator (17) for generating a forced oscillation of the lid (12), the vibration being suitable condensate of the lid (12) to solve, so that it can flow in the direction of the vessel, wherein, preferably, the vibration actuator (17) is an electric motor, in particular a reluctance motor, of the kitchen appliance (1).

## Revendications

1. Accessoire de cuisson (2) pour un récipient (3) pouvant être chauffé d'un appareil de cuisine (1), lequel accessoire de cuisson (2) présente un fond (4) avec des ouvertures de fond (5) par lesquelles de la vapeur sortant du récipient (3) peut pénétrer dans l'accessoire de cuisson (2) et/ou du condensat sortant de l'accessoire de cuisson (2) peut pénétrer dans le récipient (3), les ouvertures de fond (5) présentant au moins une ouverture pour vapeur (9) et au moins une ouverture pour condensat (10) formée séparée de l'ouverture pour vapeur (9), **caractérisé en ce que** l'ouverture de condensat (10) présente un capillaire (14) avec une première zone d'extrémité (15) et une deuxième zone d'extrémité (16), dans lequel la première zone d'extrémité (15) est agencée dans la zone du fond (4) du côté tourné vers l'intérieur de l'accessoire de cuisson (2) et la deuxième zone d'extrémité (16) est guidée hors de l'accessoire de cuisson (2) sur le côté de l'accessoire de cuisson (2) tourné vers le récipient (3) de l'appareil de cuisine (1) de manière à permettre au condensat situé dans la première zone d'extrémité (15) de s'écouler dans le récipient (3) via le capillaire (14).

2. Accessoire de cuisson (2) selon la revendication 1, **caractérisé en ce que** le fond (4) présente, sur le côté tourné vers l'intérieur de l'accessoire de cuisson (2), une pluralité d'éléments espaceurs (6) faisant saillie depuis le fond (4) pour espacer de l'ouverture de fond (5) un produit à préparer (7) contenu dans l'accessoire de cuisson (2), l'ouverture de fond (5) étant au moins partiellement entourée par les éléments espaceurs (6) dans la direction périphérique.

3. Accessoire de cuisson (2) selon la revendication 2, **caractérisé en ce que** le fond (4) présente un agencement d'une pluralité d'ouvertures de fond (5) et un agencement d'une pluralité d'éléments espaceurs (6), dans lequel l'agencement des éléments espaceurs (6) se superpose à l'agencement des ouvertures de fond (5) de manière qu'une ouverture de fond (5) soit entourée dans la direction périphérique par plusieurs éléments espaceurs (6) et qu'un élément espaceur (6) soit entouré par plusieurs ouvertures de fond (5).

4. Accessoire de cuisson (2) selon la revendication 3, **caractérisé en ce que** l'agencement des ouvertures de fond (5) et l'agencement des éléments espaceurs (6) forment une structure régulière au moins bidimensionnelle, dans laquelle un canal d'écoulement (8) pour vapeur et/ou condensat est formé entre des éléments espaceurs (6) successifs par rapport à une première direction lequel canal d'écoulement (8) présente des ouvertures de fond (5) successifs s'étendant dans une deuxième direction différente de la première direction.

5. Dispositif de cuisson (2) selon l'une des revendications 2 à 4, **caractérisé en ce que** les éléments espaceurs (6) comprennent des créneaux, des cames, des cylindres, des nervures, des pointes, des pyramides, des filaments et/ou des ondulations.

6. Accessoire de cuisson (2) selon l'une des revendications précédentes, **caractérisé en ce que** l'ouverture de vapeur (9) se rétrécit dans une direction d'écoulement de vapeur du récipient (3) vers l'intérieur de l'accessoire de cuisson (2), tandis que l'ouverture de condensation (10) se rétrécit dans une direction d'écoulement de condensat de l'intérieur de l'accessoire de cuisson (2) vers le récipient (3).

7. Accessoire de cuisson (2) selon l'une des revendications précédentes, **caractérisé en ce qu'**un élément formant collerette (11) et faisant saillie à partir du fond (4) est associé à une ou plusieurs ouvertures de fond (5) sur le côté orienté vers l'accessoire de cuisson (2) et/ou sur le côté orienté vers le récipient.

8. Récipient de cuisson selon l'une des revendications précédentes, **caractérisé en ce que** le fond (4) est au moins partiellement incliné dans la direction du récipient (3) par rapport à un plan horizontal de l'appareil de cuisine (1) posé sur une surface de travail horizontale, dans lequel l'ouverture de fond (5), en particulier une ouverture de condensat (10) pour la sortie de condensat de l'accessoire de cuisson (2) dans le récipient (3), est agencée, par rapport à une direction verticale, dans une partie la plus basse du fond incliné (4), la partie la plus basse du fond incliné (4) étant de préférence formée dans une zone centrale du fond (4) ou dans une zone de bord du fond (4).

9. Accessoire de cuisson selon la revendication 8, **caractérisé en ce que**, par rapport à la partie la plus basse du fond incliné (4), au moins une partie du fond (4) agencée au-dessus présente au moins une ouverture de vapeur (9) pour l'entrée dans l'accessoire de cuisson (2) de vapeur sortant du récipient (3), dans lequel au moins un tronçon périphérique de l'ouverture de vapeur (9), à l'opposé de la partie la plus basse, présente un élément formant collerette (11) et faisant saillie à partir du fond (4).

10. Accessoire de cuisson selon l'une des revendications précédentes, **caractérisé en ce que** qu'un actionneur vibreur (17) est associé à l'accessoire de cuisson (2) pour produire une vibration forcée de l'accessoire de cuisson (2), la vibration étant adaptée pour détacher du condensat de l'accessoire de cuisson (2) de manière que celui-ci puisse s'écouler dans la direction du récipient (3).

11. Accessoire de cuisson selon la revendication 10, **caractérisé en ce que** l'actionneur vibreur (17) est un moteur électrique, en particulier un moteur à réluctance, de l'appareil de cuisine (1).

12. Accessoire de cuisson selon l'une des revendications précédentes, **caractérisé par** un couvercle (12).

13. Dispositif de cuisson selon la revendication 12, **caractérisé en ce qu'**un côté du couvercle (12) tourné vers l'intérieur du dispositif de cuisson (2) est, par rapport à un plan horizontal de l'accessoire de cuisson (2), au moins partiellement incliné vers le fond (4) de l'accessoire de cuisson (2).

14. Accessoire de cuisson selon l'une des revendications 12 ou 13, **caractérisé en ce qu'**un côté du couvercle (12) orienté vers l'intérieur de l'accessoire de cuisson (2) présente au moins en partie une structure comprenant des créneaux, des cames, des cylindres, des nervures, des pointes, des pyramides, des fibres, des filaments et/ou des ondulations.

15. Accessoire de cuisson selon l'une des revendications 12 à 14, **caractérisé en ce qu'**un actionneur vibreur (17) est associé au couvercle fermant l'accessoire de cuisson (2) pour produire une vibration forcée du couvercle (12), la vibration étant adaptée pour détacher du condensat du couvercle (12) de manière que celui-ci puisse s'écouler dans la direction du récipient (3), l'actionneur vibreur (17) étant de préférence un moteur électrique, en particulier un moteur à réluctance, de l'appareil de cuisine (1).
